Europäisches Patentamt

European Patent Office

Office européen des brevets

(19)

(11) EP 0 807 087 B1

(12)

# EUROPEAN PATENT SPECIFICATION

(45) Date of publication and mention
of the grant of the patent:
**09.06.1999 Bulletin 1999/23**

(21) Application number: **96902527.9**

(22) Date of filing: **19.01.1996**

(51) Int Cl.⁶: **C02F 1/44**, B01D 61/12

(86) International application number:
**PCT/SE96/00054**

(87) International publication number:
**WO 96/23733 (08.08.1996 Gazette 1996/36)**

(54) **Water purifying machine having membrane chamber flushing**

Wasserreingungseinrichtung mit Spülung der Membrankammer

Dispositif de purification d'eau avec rinçage de la chambe à membrane

(84) Designated Contracting States:
**DE GB NL**

(30) Priority: **31.01.1995 SE 9500338**

(43) Date of publication of application:
**19.11.1997 Bulletin 1997/47**

(73) Proprietor: **AKTIEBOLAGET ELECTROLUX
105 45 Stockholm (SE)**

(72) Inventor: **BUELOW, Jan, Olof, Urban
S-555 92 Jönköping (SE)**

(74) Representative: **Erixon, Bo et al
c/o AB ELECTROLUX Corporate Patents &
Trademarks
105 45 Stockholm (SE)**

(56) References cited:
**WO-A-89/09436          US-A- 4 650 586**

## Description

The present invention refers to water purifying machines of the reverse osmosis type. More specifically and in accordance with the preamble of claim 1 the invention refers to a water purifying machine of the kind referred to comprising a pressure vessel containing a filtering membrane device, a water supply conduit connected to the pressure vessel via a pressure pump, a recirculation pump provided in the pressure vessel for recirculating the liquid therein, an outlet for purified water provided on the pressure vessel, a return line via a pressure valve connecting the pressure vessel to the inlet of the pressure pump, a drain outlet on the pressure vessel for dirty water collected in the pressure vessel at the dirty side of the filtering membrane, a drain conduit or the like connected to the drain outlet and incorporating a flow restrainer connected in parallel with a flush valve, and a control arrangement for the flush valve.

The invention also comprises a method for determining of the flushing time for a pressurized membrane chamber provided in an arrangement for purification of water of the reverse osmosis type, recirculation of unpurified water taking place in said membrane chamber and of the quantity of water supplied a smaller part continuously being diverted to a drain. Reference is here made to the preamble of claim 6.

In a known water purifying machine not utilizing the recirculation of water within the pressure vessel or membrane chamber it is required that in order to keep the membrane surfaces free from depositions at the dirty side thereof considerable amounts of water be allowed to be diverted to the drain for a relatively smaller quantity of tapped off clean water. In this case the water in the membrane chamber, at the dirty side of the membrane, will always have the same concentration of salts or the like as the incoming water.

In order to master the excessively high water comsumption a recirculation pump is provided which continuously recirculates water at the dirty side of the membrane in the membrane chamber in order to keep the membrane surfaces free from depositions restricting the flow. As a consequence and depending on the desired degree of reuse of the water the concentration of salts, heavy metals and other substances, which are not to pass through to the clean side of the membrane, will increase which may render it more difficult to determine the time required to effectively flush the membrane chamber after each use of the water purifying machine. Without such flushing of the membrane chamber, after a number of occasions of use the content of salts in the mebrane chamber can reach such a high level that the salt concentration will be noticeable also in the purified water due to the fact that salt ions have a tendency of diffusing through the membrane. As an example it can be mentioned that at a degree of reuse of the process water of 80%, i.e. at an inlet flow of five litres per minute and a drain flow of one litre per minut, an increase of the concentration of salts in the membrane chamber of a factor five will be obtained, i.e. the concentration will be five times as high as in the incoming water.

In the known water purifying machine flushing of the membrane chamber takes place after each use and for a time period amply sufficient for the concentration of salts therein to be reset to the value of the incoming water. This value, referred to as a normal value, can be determined by a calibration procedure performed at the installation of the machine. Inevitably, at short periods of use excess water is allowed to be diverted to the drain. Moreover, the flow restrainer may have manufacturing tolerances such that in one machine a greater amount is allowed to pass per minute than in another machine.

Accordingly, it is an object of the invention to provide an arrangement for water purification in which the flushing time can be controlled in a more accurate way so as not to be longer than necessary giving a corresponding saving of water. The object is achieved in an arrangement of the preamble of claim 1 having the special features indicated in the characterizing part of the claim.

It is also an object of the invention to provide a method for determining the flushing time according to the preamble of claim 6, the object being achieved by the method incorporating the special features indicated in this claim. Preferred embodiments have been included in the accompanying sub-claims. Among them claims 2-5 relate to the arrangement and claims 7-8 relate the the method.

Other objects of the invention and advantages thereof will appear from the following detailed description of a preferred embodiment with reference to the accompanying drawings, in which:

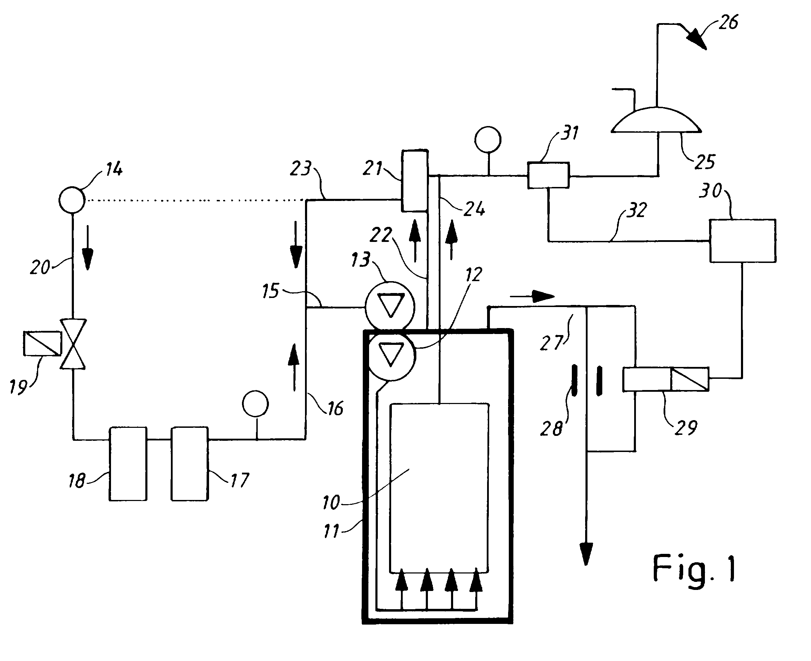

Fig. 1    schematically shows the design of a water purifying machine according to the invention;

Fig. 2    shows a diagram of the increase of the concentration in the membrane chamber as a function of time of use;

Fig. 3    shows a diagram of the flushing time as a function of the factor of increase of concentration in a case where the concentration in the membrane chamber is to be reset to that of the incoming water, and

Fig. 4    shows a diagram according to Fig. 3 relating to a case in which the concentration in the membrane chamber is allowed to remain at a level twice the level of the incoming water.

The water purifying machine of the invention is being built around a membrane device 10 of the reversed osmosis type. This technique is well-known and will not be described in detail in this context. The membrane device 10 is contained in a membrane chamber 11 having the shape of a pressure vessel also containing a recirculation pump 12 provided to recirculate the water in the membrane chamber 11 at the dirty side of the membrane. A pressure pump 13 is provided for pressurizing the water entered into the membrane chamber. The membrane chamber 11 is connected to a water inlet 14 via a short pipe 15, a conduit 16, a filtre 17 of the active carbon type, a particle filtre 18, an inlet valve 19 and a conduit 20. The water inlet can be a public water mains, a tapping point from a drilled well or the like. A double pressure valve 21 comprises two circuits one of which being connected to the membrane chamber 11 via a conduit 22 and to the inlet of the pressure pump 13 via the short pipe 15 and a return line 23. The second circuit is connected to the clean side of the membrane device, i.e. to a conduit 24 which forms an outlet conduit for the clean water leaving the membrane device. The outlet conduit 24 is connected to a tapping cock, schematically shown and designated by 25. From the cock an outlet pipe 26 extends from which the purified water can be tapped off.

The membrane chamber 11 is also provided with a drain in the shape of a drain conduit 27 connected, for example, to the public sewerage. In the drain conduit a flow restrainer 28 is provided to limit the drainage flow to a desired value, e.g. approximately 20% of the water flow supplied. In parallel to the flow restrainer 28 a valve 29, referred to as a flush valve, is provided for the purpose of opening of a parallel channel for a considerably greater flow such that a more efficient flush of the membrane chamber 11 can be performed when desired.

The double pressure valve 21, mentioned above, serve two purposes and is provided with double circuits. One circuit is connected so as to sense the pressure in the membrane chamber 11 and keeping it at a desired level by opening for a greater or lesser flow in the return line 23. The other circuit is connected to the outlet conduit 24 for purified water sensing the pressure in this conduit for the purpose of reducing the pressure in the membrane chamber 11 as the cock is closed and the pressure in the outlet conduit 24 increases. At the subsequent opening of the flush valve 29 the stress experienced by the valve will thereby be reduced.

A control device 30 is provided to control the function of the water purifying machine. In the example described the control device is a microprocessor which together with accompanying memory circuits and common auixiliary circuits controls the various components of the machine, such as pump motors, valves and the like, also ensuring the maintaining of various safety functions. The control device 30 also controls the flush valve 29, this being the part of the total function of the control device to described in this context.

For a more accurate control of the function of the flush valve the invention makes use of a conductivity measurement carried out on the purified water from the machine. To that end a gauge 31, provided in the outlet conduit 24, is connected to an input terminal of the control device via a line 32. In principle, the conductivity measurement is carried out such that the gauge is provided with two electrodes situated in the outlet conduit and surrounded by the liquid flow therein. An electric voltage is established between the electrodes and a corresponding current, being a measure of the electric conductivity, is measured.

The flushing of the membrane chamber performed after use of the machine is made to reset the concentration of salts and the like to the level of the incoming water or to a level exceeding the last-mentioned level by a suitable factor. In principle, this could be achieved by closing of the inlet and outlet of the membrane chamber and by draining off the process water remaining therein. However, this will not be sufficient because at its dirty side the membrane is covered with salt ions which need to be washed away in order for the concentration to take the desired level after the supply of fresh inlet water to the membrane chamber. In addition, such a method is not practical and it is preferred to flush out the highly concentrated water, performing in the same process cleaning of the surface of the membrane. Now, the task will be to determine the time required for the flushing to give the desired result. It has become apparent that the flushing time can be determined by a simple function comprising parameters such as the volume V of the membrane chamber, the magnitude $\phi$ of the flushing flow, and various salt concentrations and quotients thereof. The equation is as follows:

$$t_{skölj} = k \cdot V/\phi \cdot \ln(s/s_0 + 1/s_0 - 1/s),$$

where s is the factor of increased concentration when the flush is initiated, $s_0$ is the desired target factor of concentration and k is a factor specific to the product which depends on the design of the membrane and is determined experimentally. The factor k offers additional time for washing out the surface of the membrane.

Hence, the desired target factor of concentration $s_0$ is the ratio desired between the concentration in the membrane chamber after the flushing has been completed and the concentration of the incoming water. The factor of increased concentration s depends on the conductivity according to the following equation:

$$s = C/C_0 = G/G_0,$$

where C is the salt concentration (ion concentration) prevailing in the membrane chamber when the machine is shut off and G is the corresponding conductivity value while $C_0$ is the concentration of the incoming water and $G_0$ is the corresponding conductivity value.

However, according to the method of the invention the conductivity in the membrane chamber is not being used for the calculation of s but instead the conductivity $G_{ren}$ at the clean side of the membrane. This can be done as the conductivity at the clean side of the membrane is proportional to the conductivity in the membrane chamber and as the factor of proportionality is eliminated by the use of a quotient. There are several advantages connected with the measurements taken at the clean side of the membrane, i.a. is the environment less aggressive, the gauge can be made smaller, normally there is already a conductivity gauge provided at the clean side for the purpose of controlling the quality of the outlet water, etc.

The calculation of the factor s can be carried out according to the following equation:

$$s = G/G_0 = G_{ren}/G_{0ren},$$

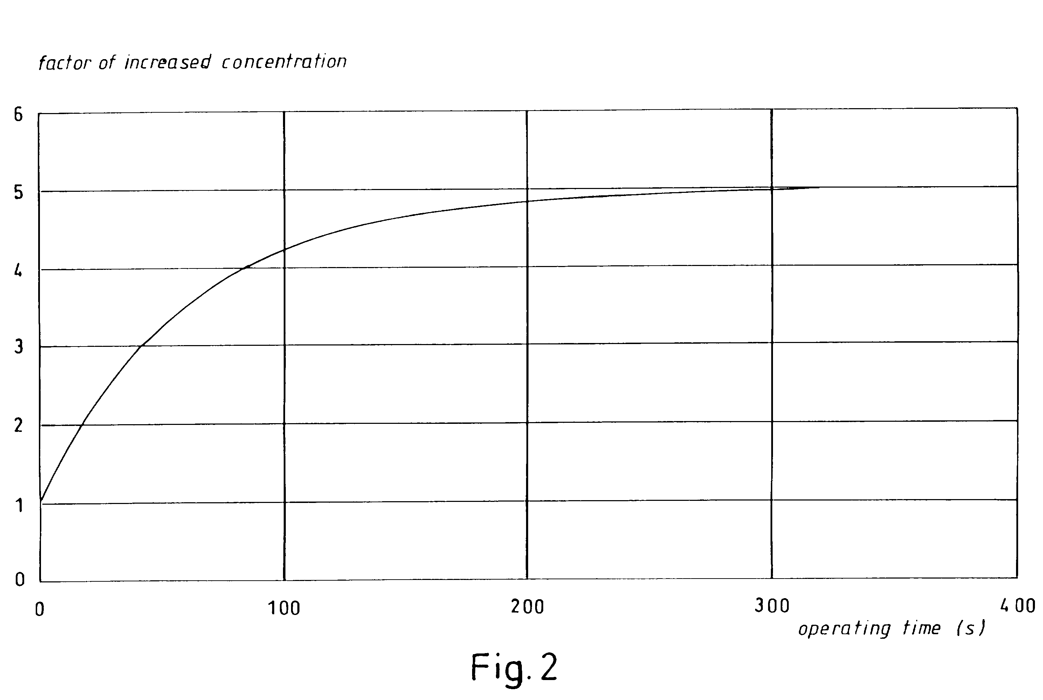

where $G_{ren}$ is the conductivity at the clean side if the water in the membrane chamber has the same conductivity as the incoming water, i.e. $G_0$. $G_{ren}$ is determined by means of a calibration procedure at the installation of the machine and is stored in a resident memory. In the calibration procedure the conductivity at the clean side is measured subsequent to the conductivity in the membrane chamber stabilizing at the highest possible level, see Fig. 2 and accompanying text.

In Fig. 2 there is shown a diagram illustrating the factor of increased concentration in the membrane chamber as a function of the operating time of the water purifying machine. In the present case the reuse factor is 80%, i.e. the inlet flow is five litres per minut and the outlet flow is one litre per minut. The diagram shows that during the first 100 seconds the factor of increased concentration strongly increases to a value exceeding four and after about 300 seconds the factor asymptotically aproaches the value five.

The conductivity measured during the calibration is, however, a factor greater than $G_{0ren}$. This factor is eliminated by division for the purpose of obtaining $G_{0ren}$ which is then stored. In the present case, with a reuse factor of 80%, $G_{0ren}$ is obtained by division of the measured value by five if the machine has been operating for more than 300 seconds before the measurement value is taken.

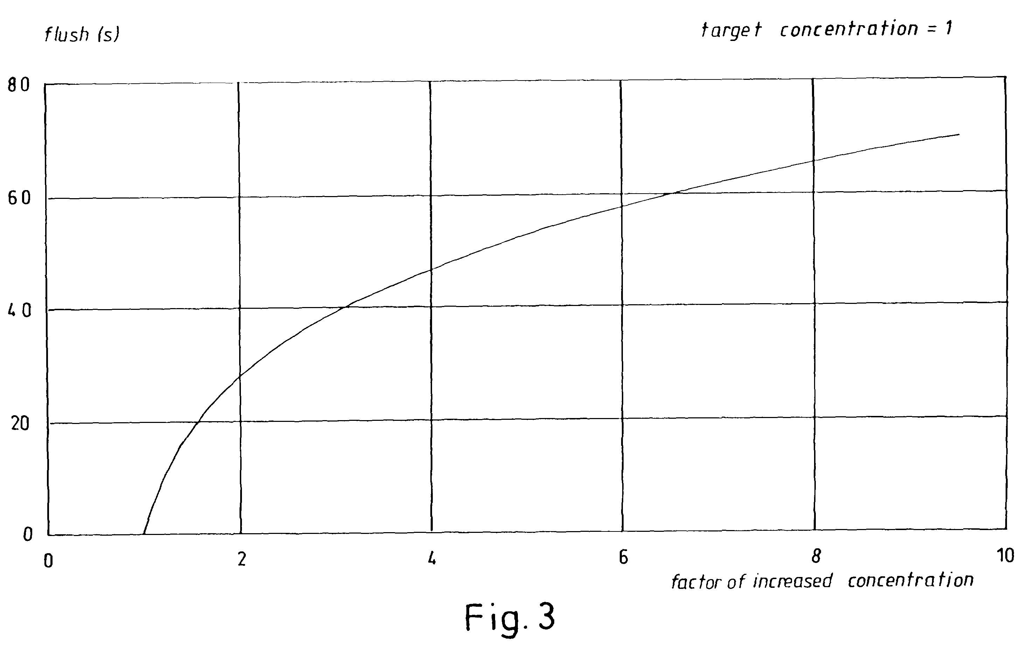

In Fig. 3 a diagram is shown wherein the flushing time in seconds has been plotted against the factor of increased concentration . In the diagram it is presumed that the desired factor of increased concentration, i.e. the target factor of concentration, equals one which means a concentration which is the same as the concentration of the incoming water. From the diagram it can be seen that if the factor of increased concentration at the shut off of the machine is three a flushing time of about 40 seconds is required for the concentration in the membrane chamber to be brought back to the value one, i.e. to a value equal to that of the incoming water.

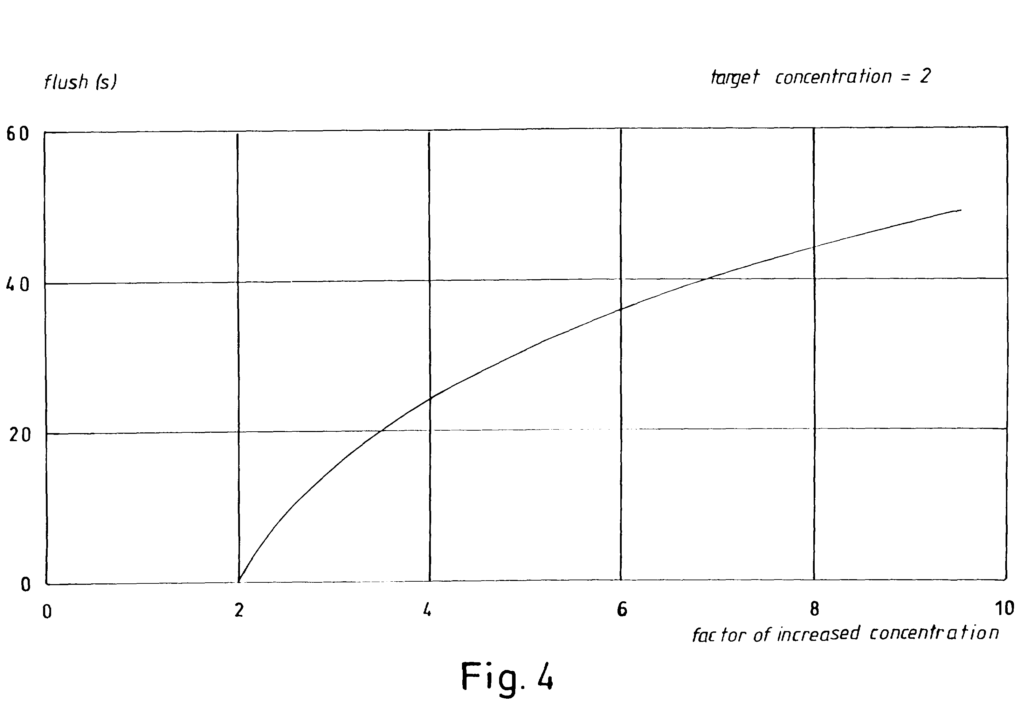

In Fig. 4 a diagram is shown corresponding to that of Fig. 3, however, with the target factor of concentration having the value two. This means that at start of the water purifying machine a concentration is acccepted in the chamber which is twice the concentration of the incoming water. The diagram shows that if the factor of increased concentration has the value three at the shut off of the machine the corresponding flushing time will be about 15 seconds for the concentration in the membrane chamber to resume the value two.

During the conductivity measurement it takes some time for the measurement value to stabilize after a transient period. Therefore, at short periods of use the conductivity measurement will not be utilized but a time-based flushing carried out.

The method described adapts itself to given conditions which means that deviations in the flushing flow and the drain flow as well as variations in the flow of incoming water will not cause a conductivity that increases in an uncontrolled manner which can happen in case of time-controlled flushing.

## Claims

1. Arrangement for water purification, comprising a pressure vessel (11) containing a filtering membrane device (10) of the reverse osmosis type, a water supply conduit (14) connected to the pressure vessel (11) via a pressure pump (13), a recirculation pump (12) provided for recirculating the liquid in the pressure vessel, an outlet (24) on the pressure vessel (11) for purified water, a return line (23, 15) via a pressure valve (21) connecting the pressure vessel (11) to the inlet of the pressure pump (13), a drain outlet provided on the pressure vessel for dirty water collected in the pressure vessel (11) at the dirty side of the filtering membrane, a drain conduit (27) or the like connected to the drain outlet and incorporating a flow restrainer (28) connected in parallel with a flush valve (29), and a control device (30) for the flush valve, **characterized** in that means (31) are provided for measuring of the conductivity of the purified water, the control device (30) being adapted after each tapping of purified water to open the flush valve (29) for a time period determined by the quotient beween the last measured conductivity level ($G_{ren}$) and a normal level of conductivity ($G_{0ren}$) stored in the control device (30).

2. Arrangement according to claim 1, **characterized** in that the normal level ($G_{0ren}$) is a value of conductivity of the purified water determined by a calibration procedure performed prior to the first use of the machine, said normal level ($G_{0ren}$) being based on a value of conductivity measured at the clean side subsequent to the salt concentration in the membrane chamber (11) being stabilized at its highest level.

3. Arrangement according to claim 2, **characterized** in that the normal level ($G_{0ren}$) is determined by a conductivity value of the purified water being measured when the conductivity values have stabilized at a steady level, said conductivity value being reduced by a factor determined by the ratio between the water flow supplied and the flow diverted to the drain.

4. Arangement according to any of the preceding claims, **characterized** in that the flushing time is determined according to the equation

$$t_{skölj} = k \cdot V/\phi \cdot \ln(s/s_0 + 1/s_0 - 1/s),$$

where V is the volume of the membrane chamber, $\phi$ is the magnitude of the flush flow, s is the factor of increased concentration when the flush is initiated, $s_0$ is the desired target factor of concentration after flushing has taken place and k is a factor specific to the product.

5. Arrangement according to any of the preceding claims, **characterized** in that the control device (30) is adapted at tapping times shorter than a predetermined value to keep the flush valve open for a predetermined time period independent of the value of conductivity.

6. A method for determining of the flushing time of a pressurized membrane chamber (11) in an arrangement for purification of water of the reverse osmosis type, wherein in the membrane chamber (11) recirculation of unpurified water takes place and of the quantity of water supplied a smaller part is always diverted to a drain (27), **characterized** in that the flushing time is determined by the quotient between the conductivity level ($G_{ren}$) of the purified water after tapping has been completed and a normal value ($G_{0ren}$) of conductivity corresponding to the value prevailing in the membrane chamber (11) converted into the conductivity value of the water supplied to the membrane chamber (11) or this value increased by a factor.

7. A method according to claim 6, **characterized** in that the predetermined normal value ($G_{0ren}$) is determined by a calibration procedure carried out prior the first use of the water purification arrangement, measuring of the conductivity value being performed repeatedly and the conductivity value is chosen which is measured when the values of conductivity have stabilized at a steady level, the conductivity value chosen being reduced by a factor determined by the ratio between the water flow supplied and the flow diverted to the drain (27) to form the normal value ($G_{0ren}$).

8. A method according to claim 7, **characterized** in that the flushing time is determined according to the equation

$$t_{skölj} = k \cdot V/\phi \cdot \ln(s/s_0 + 1/s_0 - 1/s),$$

where V is the volume of the membrane chamber, $\phi$ is the magnitude of the flush flow, s is the factor of increased concentration when the flush is initiated, $s_0$ is the desired target factor of concentration after flushing has taken place and k is a factor specific to the product.

**Patentansprüche**

1. Vorrichtung zur Wasserreinigung mit einem Druckbehälter (11), der eine Filtermembranvorrichtung (10) nach dem Prinzip der umgekehrten Osmose enthält;

einer Wasserversorgungsleitung (14), die mit dem Druckbehälter (11) über eine Druckpumpe (13) verbunden ist;
eine Umlaufpumpe (12), die zum Umpumpen der Flüssigkeit in dem Druckbehälter vorgesehen ist;
ein Abfluß (24) an dem Druckbehälter (11) für das gereinigte Wasser;
eine Rückführleitung (23, 15), die den Druckbehälter (11) über ein Druckventil (21) mit dem Zulauf der Druckpumpe (13) verbindet;
einem Ablauf, der an dem Druckbehälter für Schmutzwasser vorgesehen ist, das in dem Druckbehälter (11) auf der Schmutzseite der Filtermembran gesammelt wird;
einer Ablaufleitung (27) o. ä., die mit dem Ablauf verbunden ist und einen Durchflußbegrenzer (28) aufnimmt, der parallel mit einem Spülventil (29) verbunden ist; und
mit einer Steuervorrichtung (30) für das Spülventil,

dadurch gekennzeichnet, daß
eine Einrichtung (31) zur Messung der Leitfähigkeit des gereinigten Wassers vorgesehen ist, wobei die Steuervorrichtung (30) darauf ausgerichtet ist, nach jedem Entnehmen von gereinigtem Wasser das Spülventil (29) für eine Zeitspanne zu öffnen, die durch den Quotienten zwischen dem zuletzt gemessenen Leitfähigkeitsniveau ($G_{ren}$) und einem normalen Niveau der Leitfähigkeit ($G_{0ren}$), der in der Steuervorrichtung (30) gespeichert ist, bestimmt wird.

2. Vorrichtung nach Anspruch 1, dadurch gekennzeichnet, daß das normale Niveau ($G_{0ren}$) ein Leitfähigkeitswert des gereinigten Wassers ist, der durch ein Kalibrierungsverfahren bestimmt wird, das vor der ersten Verwendung der Vorrichtung ausgeführt wird, wobei das normale Niveau ($G_{0ren}$)

auf einem Leitfähigkeitswert basiert, der auf der sauberen Seite gemessen wurde, nachdem sich die Salzkonzentration in der Membrankammer (11) in ihrem höchsten Niveau stabilisiert hat.

3. Vorrichtung nach Anspruch 2, dadurch gekennzeichnet, daß das normale Niveau ($G_{0ren}$) durch einen Leitfähigkeitswert des gereinigten Wassers bestimmt wird, der gemessen wird, wenn sich die Leitfähigkeitswerte auf einem gleichbleibenden Niveau stabilisiert haben, wobei der Leitfähigkeitswert durch einen Faktor reduziert wird, der durch das Verhältnis zwischen dem zugeführten Wasserfluß und dem Fluß, der zu dem Ablauf abgeleitet wird, bestimmt wird.

4. Vorrichtung nach einem der vorhergehenden Ansprüche, dadurch gekennzeichnet, daß die Spülzeit gemäß der Gleichung

$$T_{skölj} = K \cdot V/\phi \cdot \ln (s/s_0 + 1/s_0\text{-}1/s)$$

bestimmt wird, wobei V das Volumen der Membrankammer ist, $\phi$ die Größe des Spülflusses ist, s der Faktor der angestiegenen Konzentration ist, wenn die Spülung begonnen wird, $s_0$ der gewünschte Zielfaktor der Konzentration ist, nachdem die Spülung stattgefunden hat, und K ein für das Produkt spezifischer Faktor ist.

5. Vorrichtung nach einem der vorhergehenden Ansprüche, dadurch gekennzeichnet, daß die Steuervorrichtung (30) an Entnahmezeiten angepaßt ist, die kürzer sind als ein vorbestimmter Wert, um das Spülventil für eine vorbestimmte Zeitspanne offenzuhalten, unabhängig von dem Leitfähigkeitswert.

6. Verfahren zur Bestimmung der Spülzeit einer unter Druck stehenden Membrankammer (11) in einer Vorrichtung zur Reinigung von Wasser nach dem Prinzip der umgekehren Osmose, bei welcher in der Membrankammer (11) ein Umlaufen des ungereinigten Wassers stattfindet, sowie zur Bestimmung der Menge des zugeführten Wassers, wobei ein kleiner Teil immer zu einem Ablauf (27) abgeleitet wird, dadurch gekennzeichnet, daß die Spülzeit durch den Quotienten zwischen dem Leitfähigkeitsniveau ($G_{ren}$) des gereinigten Wassers nach der Entnahme und einem Normalniveau ($G_{0ren}$) der Leitfähigkeit entsprechend einem Wert, der in der Membrankammer (11) vorherrscht, bestimmt wird, wobei der Wert in den Leitfähigkeitswert des der Membrankammer (11) zugeführten Wassers umgewandelt wird, oder dieser Wert durch einen Faktor erhöht wird.

7. Verfahren nach Anspruch 6, dadurch gekennzeichnet, daß der vorbestimmte normale Wert ($G_{0ren}$) durch ein Kalibrierungsverfahren bestimmt wird, das vor der ersten Benutzung der Wasserreinigungsvorrichtung ausgeführt wird, wobei die Messung des Leitfähigkeitswerts wiederholt ausgeführt wird und der Leitfähigkeitswert gewählt wird, der gemessen wird, wenn die Leitfähigkeitswerte sich in einem gleichbleibenden Niveau stabilisiert haben, und wobei der gewählte Leitfähigkeitswert durch einen Faktor reduziert wird, der durch das Verhältnis zwischen dem zugeführten Wasserfluß und dem Durchfluß, der zu dem Ablauf (27) abgeleitet wird, bestimmt wird, um den Normalwert ($G_{0ren}$) zu bilden.

8. Verfahren nach Anspruch 7, dadurch gekennzeichnet, daß die Spülzeit gemäß der Gleichung

$$T_{skölj} = K \cdot V/\phi \cdot \ln (s/s_0 + 1/s_0\text{-}1/s)$$

bestimmt wird, wobei V das Volumen der Membrankammer ist, $\phi$ die Größe des Spülflusses ist, s der Faktor der angestiegenen Konzentration ist, wenn die Spülung begonnen wird, $s_0$ der gewünschte Zielfaktor der Konzentration ist, nachdem die Spülung stattgefunden hat, und K ein für das Produkt spezifischer Faktor ist.

**Revendications**

1. Dispositif pour purifier de l'eau, comprenant un récipient sous pression (11) contenant un dispositif à membrane de filtration (10) du type osmose inverse, une conduite d'alimentation en eau (14) reliée au récipient sous pression (11) par une pompe à pression (13), une pompe de recirculation (12) fournie pour recycler le liquide dans le récipient sous pression, une sortie (24) sur le récipient sous pression (11) pour l'eau purifiée, une conduite de retour (23, 15), passant par une soupape de pression (21), reliant le récipient sous pression (11) à l'entrée de la pompe à pression (13), une sortie de vidange fournie sur le récipient sous pression pour l'eau sale recueillie dans le récipient sous pression (11) du côté sale de la membrane de filtration, une conduite de vidange (27) ou similaire raccordée à la sortie de vidange et incorporant un limiteur de débit (28) raccordé en parallèle à une soupape de chasse (29), et un dispositif de commande (30) pour la soupape de chasse, caractérisé en ce que des moyens (31) sont fournis pour mesurer la conductivité de l'eau purifiée, le dispositif de commande (30) étant apte, après chaque soutirage d'eau purifiée, à ouvrir la soupape de chasse (29) pendant une durée déterminée par le quotient entre le dernier niveau de conductivité mesuré ($G_{ren}$) et un niveau de

conductivité normal ($G_{0ren}$) stocké dans le dispositif de commande (30).

2. Dispositif selon la revendication 1, caractérisé en ce que le niveau normal ($G_{0ren}$) est une valeur de conductivité de l'eau purifiée déterminée par un mode opératoire d'étalonnage effectué avant la première utilisation de la machine, ledit niveau normal ($G_{0ren}$) étant fondé sur la valeur de conductivité mesurée du côté propre après que la concentration des sels dans la chambre à membrane (11) soit stabilisée à son niveau le plus élevé.

3. Dispositif selon la revendication 2, caractérisé en ce que le niveau normal ($G_{0ren}$) est déterminé par la valeur de conductivité de l'eau purifiée mesurée lorsque les valeurs de conductivité sont stabilisées à un niveau constant, ladite valeur de conductivité étant réduite d'un facteur déterminé par le rapport entre le débit d'eau fourni et le débit dérivé vers la vidange.

4. Dispositif selon l'une quelconque des revendications précédentes, caractérisé en ce que le temps de chasse est déterminé d'après l'équation :

$$t_{skölj} = k \cdot V/\phi \cdot \ln(s/s_0 + 1/s_0 - 1/s),$$

où V est le volume de la chambre à membrane, Ø est la grandeur du débit de chasse, s est le facteur de concentration accrue lorsque la chasse commence, $s_0$ est le facteur cible de la concentration souhaité après que la chasse ait eu lieu et k est un facteur spécifique au produit.

5. Dispositif selon l'une quelconque des revendications précédentes, caractérisé en ce que le dispositif de commande (30) est apte, à des temps de soutirage plus courts qu'une valeur prédéterminée, à maintenir la soupape de chasse ouverte pendant une durée prédéterminée indépendante de la valeur de la conductivité.

6. Procédé pour déterminer le temps de chasse d'une chambre à membrane sous pression (11) dans un dispositif pour purifier de l'eau du type osmose inverse, dans lequel un recyclage d'eau non purifiée a lieu dans la chambre à membrane (11) et, sur la quantité d'eau fournie, une plus petite partie est toujours dérivée vers une vidange (27), caractérisé en ce que le temps de chasse est déterminé par le quotient entre le niveau de conductivité ($G_{ren}$) de l'eau purifiée au terme du soutirage et une valeur normale ($G_{0ren}$) de la conductivité correspondant à la valeur prévalant dans la chambre à membrane (11) convertie en la valeur de conductivité de l'eau fournie à la chambre à membrane (11) ou cette valeur augmentée d'un facteur.

7. Procédé selon la revendication 6, caractérisé en ce que la valeur normale prédéterminée ($G_{0ren}$) est déterminée par un mode opératoire d'étalonnage effectué avant la première utilisation du dispositif de purification d'eau, la mesure de la valeur de conductivité étant effectuée à plusieurs reprises, et on choisit la valeur de conductivité qui est mesurée lorsque les valeurs de conductivité sont stabilisées à un niveau stationnaire, la valeur de conductivité choisie étant réduite d'un facteur déterminé par le rapport entre le débit d'eau fourni et le débit dérivé vers la vidange (27) pour former la valeur normale ($G_{0ren}$).

8. Procédé selon la revendication 7, caractérisé en ce que le temps de chasse est déterminé d'après l'équation :

$$t_{skölj} = k \cdot V/\phi \cdot \ln(s/s_0 + 1/s_0 - 1/s),$$

V est le volume de la chambre à membrane, Ø est la grandeur du débit de chasse, s est le facteur de concentration accrue lorsque la chasse commence, so est le facteur cible de concentration souhaité après que la chasse ait eu lieu et k est un facteur spécifique au produit.

Fig. 1

factor of increased concentration

operating time (s)

Fig. 2

EP 0 807 087 B1

Fig. 3

Fig. 4

flush (s)

target concentration = 2

factor of increased concentration

EP 0 807 087 B1